# EUROPEAN PATENT SPECIFICATION

(11) **EP 3 190 870 B1**
(45) Date of publication and mention of the grant of the patent: **19.01.2022**
(21) Application number: 15790302.2
(22) Date of filing: 08.09.2015
(51) Int. Cl.: A01G 9/12

(54) **VERTICAL GROWTH GUIDE REEL**
FÜHRUNGSSPULE FÜR VERTIKALES WACHSTUM
DÉVIDOIR DE GUIDE DE CROISSANCE VERTICALE

(30) Priority: 09.09.2014 NL 2013440
(43) Date of publication of application: 19.07.2017
(73) Proprietor: Peter Geurts Holding B.V., 5961 GT Horst (NL)
(72) Inventor: GEURTS, Peter Johannes Lodewijk, NL-5961 GT Horst (NL); THIJSSEN, Robertus Leonard Maria, NL-5975 PL Sevenum (NL); GOOREN, Peter Antonius Maria, NL-5871 AZ Broekhuizenvorst (NL)
(74) Representative: Algemeen Octrooi- en Merkenbureau B.V.
(86) International application number: PCT/NL2015/050621
(87) International publication number: WO 2016/072844

(56) References cited:
- WO-A1-96/29855
- FR-A1- 2 870 670
- JP-A- 2001 145 427
- JP-A- 2005 229 933
- KR-B1- 101 107 732
- NL-C1- 1 027 408
- US-A1- 2010 229 463

## Description

The invention relates to a device for making climbing plants such as tomato plants or cucumber plants grow substantially in vertical direction, the device comprising a rotatable holder element provided with climbing medium, such as wire or string, which extends vertically downward from the holder element, at least in use, wherein a length of the climbing medium extending from the holder element can be adjusted by rotation of the holder element. The invention also relates to a cultivation system comprising such a device.

In the cultivation of plants, such as tomatoes and cucumbers, it is important to train the plants vertically upward, so that the fruits of the plants can be harvested at a desired working height. Use is made of a holder on which string is wound. The holder is suspended at a particular height, for example from a steel wire. The string or a wire hangs down and the plant grows upward along said string or wire. To compensate for the greater length of the plant, the holder is also moved a horizontal distance, for example by being moved some distance over the steel wire. In a known embodiment this is done by hand, which is quite labour-intensive.

From the prior art there is known the system by means of which it has been attempted to automate this process. NL8702251 thus discloses a system of reels for guiding string, which reels are suspended from a horizontal wire. A steel wire can be driven via an electric motor. When the steel wire is set moving, all the reels will unwind under the influence of the weight of the plants and move in horizontal direction by means of gears. When the electric motor is stopped, the lowering of the plants is stopped as well.

Because a large number of reels are connected to a single wire, a relatively large weight will have to be moved by the electric motor. This makes the known automatic system relatively complex and makes it relatively difficult to control the desired height of the plant, in particular if the plant only needs to be lowered by a small amount. Lowering the plant too much is undesirable. In addition to that, the known automatic system further has the drawback that it provides little flexibility in lowering plants individually and moving the reel individually over a smaller or larger horizontal distance. This may for example be desirable if some plants grow faster than others. FR 2 870 670 and WO9629855 A1 each disclose a flexible stake reeling device for tomato plants.

The object of the present invention, according to a first aspect thereof, is therefore to provide a device as described in the introduction which at least alleviates the above drawbacks. It is in particular an object of the invention to provide a device as described in the introduction which is constructionally relatively simple and by means of which a precise adjustment of the plant height can be realised both manually and automatically.

This object is achieved by the present invention by means of a device according to claim 1. The device according to the invention comprises a rotatable holder element provided with climbing medium, such as wire or string. The invention comprises a brake assembly which is configured to prevent rotation of the holder element in an actuated position, such that undesirable unwinding of the climbing medium can be prevented. In a non-actuated position, the brake assembly can furthermore allow rotation of the holder element. The brake assembly comprises an escapement mechanism. The device comprises a cogwheel that is operatively connected to the holder element. The escapement mechanism is configured to engage the cogwheel. The cogwheel can have a relatively simple configuration if it is a relatively flat disc-shaped element, on which projections forming teeth of the cogwheel are circularly provided. The escapement mechanism is configured to act on the holder element in such a manner that in the non-actuated position of the brake assembly the holder element can only rotate through a limited angle. As a result of the use of an escapement mechanism, the rotatable holder element will only rotate through a limited angle when the brake assembly is placed in the non-actuated position, irrespective of the time during which the brake assembly is controlled to be in the non-actuated position. The escapement mechanism will directly return the brake assembly to an actuated position, as it were. As a result, unwinding can take place in very precisely controlled steps, both automatically and manually, in that said steps are relatively small. Because said unwinding takes place step-by-step, the height of the plants can thus be controlled in a relatively simple manner. The object of the present invention is thus achieved.

In particular it is noted that the escapement mechanism provides an automatic limitation to the possibility of unwinding. Unintentional unwinding by too much, for example in that the brake assembly is unintentionally operated too long, is thus not possible. The escapement mechanism provides a safeguard against unintentional unwinding, as it were, which is not possible in the prior art.

Advantageous embodiments form the subject matter of the dependent claims. These embodiments will be further discussed hereinafter.

In one embodiment, the escapement mechanism comprises one or more stop elements configured to engage teeth of the cogwheel. In particular, at least two stop elements are provided, as this makes it possible to realise a reliable limitation of the unwinding of the climbing medium from the holder element. It is conceivable for the escapement mechanism to comprise a multitude of stop elements. Such an embodiment leads to an improved life span, because the forces that occur are distributed over several stop elements.

In one embodiment the device comprises a moving element for moving the device substantially in horizontal direction. In addition to the already available compensation for the growth of the plant in vertical direction this also makes it possible to realise compensation in horizontal direction.

In a special embodiment the brake assembly is configured to prevent movement of the device in horizontal direction in the actuated position and to allow movement of the device in horizontal direction in the non-actuated position, wherein the escapement mechanism is configured to act on the moving element in such a manner that in the non-actuated position of the brake assembly the device can only be moved by a limited horizontal distance. The escapement mechanism will thus have a dual function. It makes it possible for the plant to be lowered vertically in steps and further makes it possible to move the end of the plant also horizontally in steps. In this way a controlled total movement is obtained.

In a constructionally simple embodiment, the moving element is operatively connected to the rotatable holder element for rotating the holder element during a horizontal movement.

The moving element can furthermore have a relatively simple configuration if it comprises a guide wheel that is configured to be movable over a substantially horizontally extending cable. The cable forms part of a cultivation system that will be explained in more detail yet hereinafter. The cable is placed some vertical distance from the bottom of the climbing plants and extends substantially in horizontal direction. The device according to the present invention can be placed on the cable via the guide wheel.

In one embodiment, in order to obtain a stable placement, the guide wheel comprises one or more flanged edges. Preferably, two flanged edges form a U-shaped profile.

The operative connection between the moving element, in particular the guide wheel, and the rotatable holder element can be realised in various manners.

Thus it is for example conceivable for the guide wheel to engage the holder element via a direct connection. Such an embodiment is possible if the moving element comprises a gear element. The holder element will in that case comprise a further gear element. The gear element and the further gear element will directly engage one another in that case.

It is also conceivable for the moving element to be indirectly connected to the rotatable holder element via a transmission. The transmission can be effected by means of endless belts, for example.

In a reliable and relatively simple embodiment, the transmission is effected by means of gear elements. The transmission is in that case in particular a transmission in the form of a gear disposed between the gear element and the further gear element.

If use is made of the cogwheel, it is preferable if said cogwheel is provided on one or more of the gear element, the further gear element and the transmission. Using such an embodiment, a relatively compact device is obtained.

In one embodiment, in order to realise an adequate manual and/or automatic operation, the brake mechanism comprises an actuator element for alternately placing the brake assembly in the actuated and the non-actuated position.

In a special embodiment, which is in particular suitable for automatic operation, the device comprises a receiving space for a pressure line. The receiving space is provided in such a manner that, in use, the actuator element is moved to the actuated position upon pressurisation of the pressure line. The receiving space is preferably at least partially bounded by the actuator element.

In one embodiment, urging means may furthermore be provided for placing the brake assembly in the actuated position. The urging means are for example spring means. The urging means can urge the actuator element to a starting position.

In one embodiment, the holder element is detachably connected to the device. In this way a new holder element provided with new climbing medium can be connected to the device once the climbing medium has been fully unwound from the holder element.

According to one aspect, the invention provides a cultivation system for cultivating climbing plants, in particular tomato plants or cucumber plants, wherein the cultivation system comprises a substantially horizontally extending wire element as well as one or more devices according to the present invention, which devices are connected to the wire element.

In one embodiment, the cultivation system comprises an actuator line which is connected to at least one device, for example by being accommodated in a receiving space thereof, which actuator line is configured to place the brake assembly associated with the device in a non-actuated position upon actuation of the actuator line.

In one embodiment, the actuator line is a pressure line, in particular a pneumatic pressure line. Upon pressurisation of the pressure line, the brake assembly is placed in a non-actuated position, so that a step-by-step rotation of the holder element, possibly together with a step-by-step movement of the device is possible. The escapement mechanism of the device according to the present invention prevents climbing medium from continuing to be unwound as long as the pressure line is pressurised. By pressuring the pressure line in a pulsed manner, the desired length of climbing medium can be unwound in small steps, possibly combined with a desired horizontal movement of the device.

The invention will now be explained in more detail by means of a description of one or more preferred embodiments of a device according to the present invention with reference to the following figures, in which:

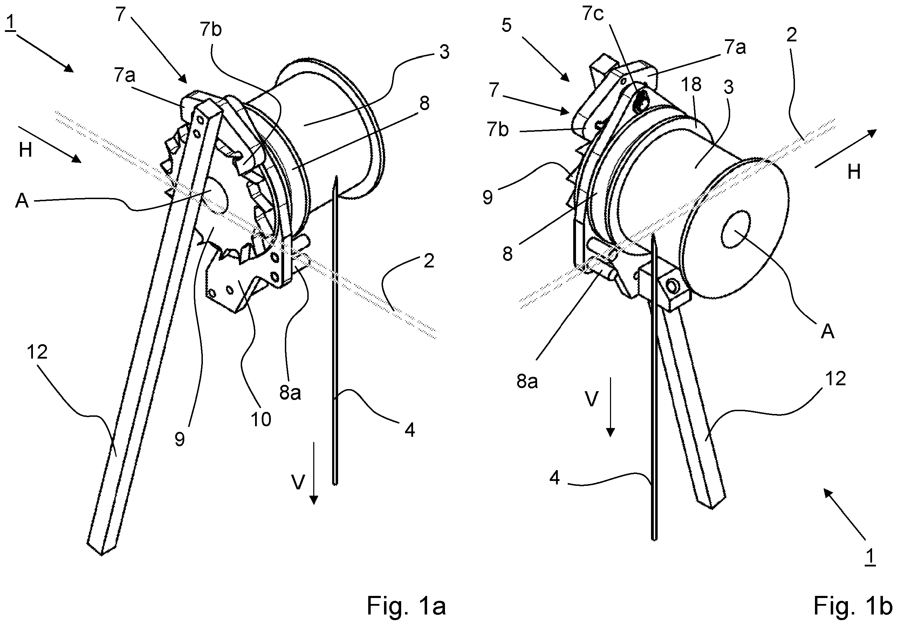

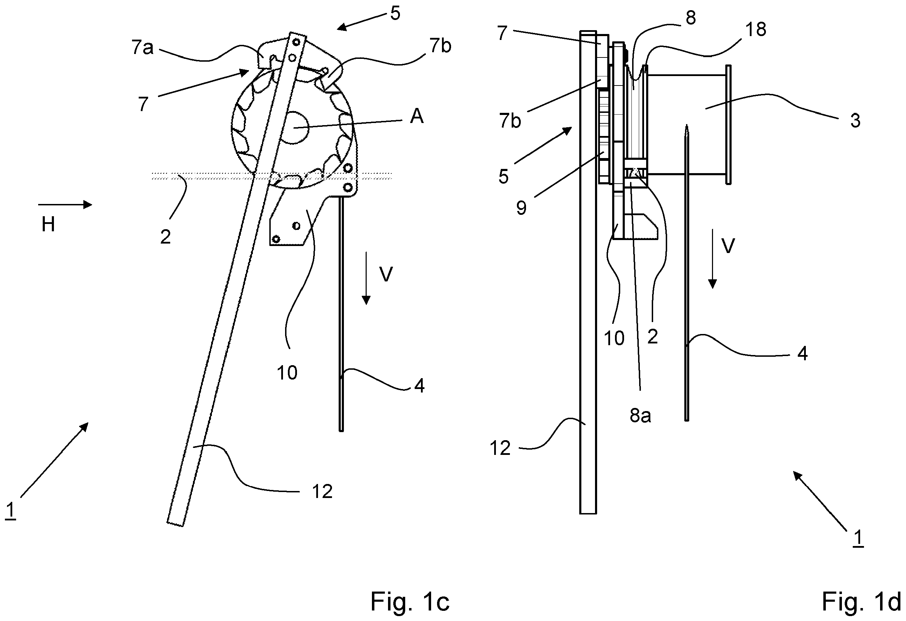

Figure 1a is an isometric schematic view of an embodiment of a device according to the present invention;
Figure 1a is an isometric schematic view of the device shown in figure 1a;
Figure 1c is a schematic front view of the device shown in figure 1a;
Figure 1d is a schematic side view of the device shown in figure 1a;
Figure 2a is an isometric schematic view of an alternative embodiment of a device according to the invention;
Figure 2b is a schematic side view of the device shown in figure 2a;
Figure 2c is a schematic front view of the device shown in figure 2a;
Figure 2d is an isometric schematic view of the device shown in figure 2a;
Figure 3a is an isometric schematic view of another alternative preferred embodiment of a device according to the invention;
Figure 3b is a schematic front view of the device shown in figure 3a;
Figure 3c is a schematic side view of the device shown in figure 3a;
Figure 3d is a schematic sectional side view of the device shown in figure 3a;
Figure 4a is a schematic view of a cultivation system according to an embodiment of the present invention;
Figures 4b and 4c are schematic detail views of the cultivation system of figure 4a;
Figures 5a and 5b are a front view and a rear view, respectively, of a holder element according to the present invention.

Figures 1a and 1b show a relatively simple embodiment of a device 1 according to the present invention. The device comprises a rotatable holder element 3, on which a climbing medium 4 is wound in use. In use, the climbing medium 4 extends downward substantially in vertical direction V from the holder element 3. The length of the climbing medium 4 extending from the holder element can be adjusted by rotation of the holder element 3. In addition to that it is possible to adjust the length by manually unwinding the climbing medium 4, without rotation of the holder element 3, by manually unwinding the string from the outer circumference of the holder element 3. The device 1 further comprises a base element 10, which comprises a passage (not shown) through which a holder shaft A is passed. The holder element 3 is connected to the holder shaft A. Disposed between the holder element 3 and the base element 10 is a guide wheel 8, which is provided with a flanged edge 18, whose function will be discussed hereinafter. The base element 10 is further provided with guide means 8a and 8b. On the side of the base element 10 opposite the holder element 3 a brake assembly 5 is provided, which brake assembly comprises an escapement mechanism 7. The escapement mechanism 7 is provided with stop elements 7a and 7b, which are connected to an actuator element 12. The stop elements 7a and 7b are movably connected to the base element 10 via a stop pin 7c. A cogwheel 9 is connected to the holder shaft A. The cogwheel 9 can be engaged by the stop elements 7a and 7b of the escapement mechanism, wherein at most one of the stop elements 7a and 7b can be in engagement with a tooth of the cogwheel 9.

In use of the device 1, the device is movable over a cable 2. The cable 2 extends between the two guide means 8a and 8b and passes along the moving element 8. The moving element 8 in the form of a guide wheel 8 is thus supported on the cable and can roll over said cable. In figures 1a - 1d the device 1 is shown in an actuated position of the brake assembly 5, in which the stop element 7a or 7b is in engagement with the cogwheel 9. In the position shown in figures 1a - 1d, the stop element 7b engages a tooth of the cogwheel 9, thereby preventing rotation of the holder element 3. The gear assembly is moved from the actuated position shown in figures 1a - 1d to a non-actuated position by rotating the escapement mechanism about the stop pin 7c such that the stop element 7b moves out of engagement with a tooth of the cogwheel 9. Because the cogwheel 9 is no longer engaged, the cogwheel 9 can rotate until the cogwheel 9 moves into engagement with the stop element 7a. As a result of the repetitive movement into and out of engagement of the stop elements 7a and 7b and the cogwheel 9, the holder shaft A will rotate step-by-step and the winding medium 4 will unwind from the holder element 3.

When the winding medium 4 unwinds from the holder element 3 as a result of the rotation of the holder 3, the moving element 8 will also rotate because the element 8 is also connected to the holder shaft A. This step-by-step rotation results in a step-by-step movement of the moving element 8 over the cable 2, causing the device 1 to move step-by-step over the cable 2 in a horizontal direction H. An embodiment comprising a freely rotatable moving element is also conceivable if the device is used for plants wherein the device 1 is pulled over the cable under the influence of the weight of the plants connected to the climbing medium 4.

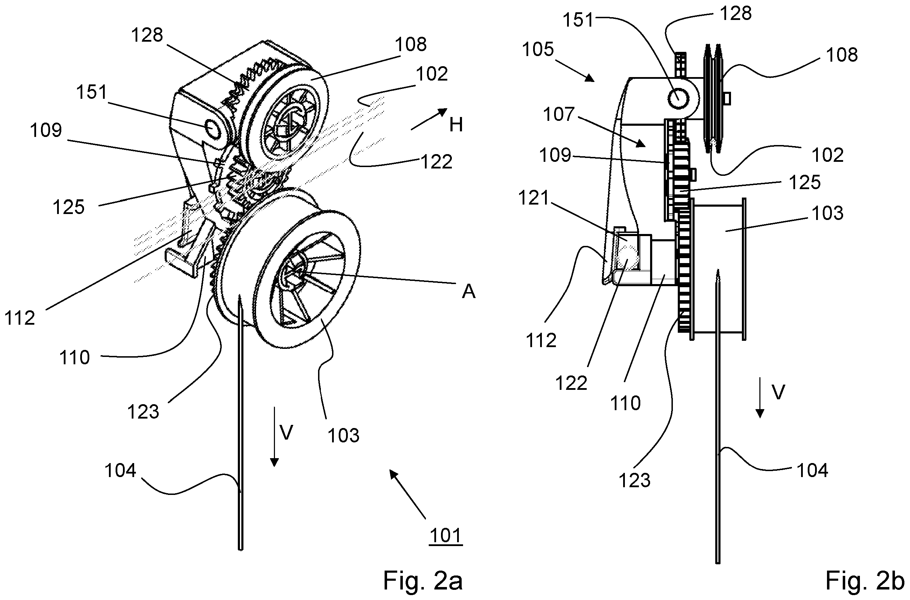

Figures 2a - 2d show another embodiment of the device 101. In these figures, parts comparable to the parts shown in figures 1a - 1d are indicated by the same reference numerals incremented by 100.

The device 101 shown in figures 2a - 2d comprises a transmission 125, which operatively connects the moving element 108 to the holder element 103. The moving element 108 is to that end provided with a gear element 128, which is in engagement with the transmission 125, and the holder element 103 is provided with a further gear element 123, which is likewise in engagement with the transmission. The holder element 103 is rotatably provided on the holder shaft A1, which holder shaft A1 is connected to the base element 110. The transmission 125, in this case in the form of a gear element 125, is further provided with the cogwheel 109. The stop elements 107a and 107b are provided on the actuator element 112 in the form of cams, which actuator element 112 is rotatably connected to the base element 110 by means of a pivot pin 151. The base element 110 and the actuator element 112 together form a receiving space 121, in which a pressure line 122 is provided in use.

In use of the device 101, the device 101 is supported on a substantially horizontally extending cable 102 via its moving element 108. In use of the device 101, the holder element 103 is located at the bottom side of the cable 102. In figures 2a - 2d, the device 101 is shown in an actuated position of the brake assembly 105, in which the stop element 107a or 107b is in engagement with the cogwheel 109. In the situation shown in figures 2a - 2d, the stop element 107b engages a tooth of the cogwheel 109, thereby preventing rotation of the cogwheel 109. Because the holder element 103 engages the transmission 125, which is provided with the cogwheel 109, rotation of the holder element 103 is prevented. The brake assembly 105 is moved from the actuated position shown in figures 2a - 2d to the non-actuated position by rotating the actuator element 112 about the pivot pin 151, such that the stop element 107b moves out of engagement with a tooth of the cogwheel 109. Since the cogwheel 109 moves out of said engagement, the cogwheel 109 can rotate until the cogwheel 109 moves into engagement with the stop element 107a. As a result of the stop elements 107a and 107b being repetitively moved into engagement with the cogwheel 109, the holder element 102 will rotate step-by-step about the holder shaft A1, causing the winding medium 104 to unwind from the holder element 103.

The stop elements 107a, 107b are in this case stop surfaces which are staggered relative to each other, which stop surfaces are configured to alternately engage a tooth of the cogwheel 109.

Rotation of the actuator element 112 takes place by alternately pressurising the pressure line 122 and reducing the pressure in the pressure line 122. Pressurising the pressure line 122 will cause the pressure line to expand, so that the diameter of the pressure line 122 will increase. As a result, the actuator element 112 is rotated about the pivot pin 151 relative to the base element 110. In this situation, in which the pressure line has expanded, the stop element 107a is in engagement with the cogwheel 109. Reducing the pressure in the pressure line 122 will cause the diameter of the pressure line 122 to decrease, as a result of which the actuator element 112 will rotate about the pivot pin 151 in a direction opposite the direction of rotation relative to the base element 110 upon pressurisation of the pressure line 122. This opposite movement can take place under the influence of the weight of the climbing plant, or under the influence of an actuator provided for that purpose, for example in the form of a(n) (extension) spring, which effects a return movement of the actuator element. In the reduced pressure condition of the pressure line 122, the stop element 107b is in engagement with the cogwheel 109.

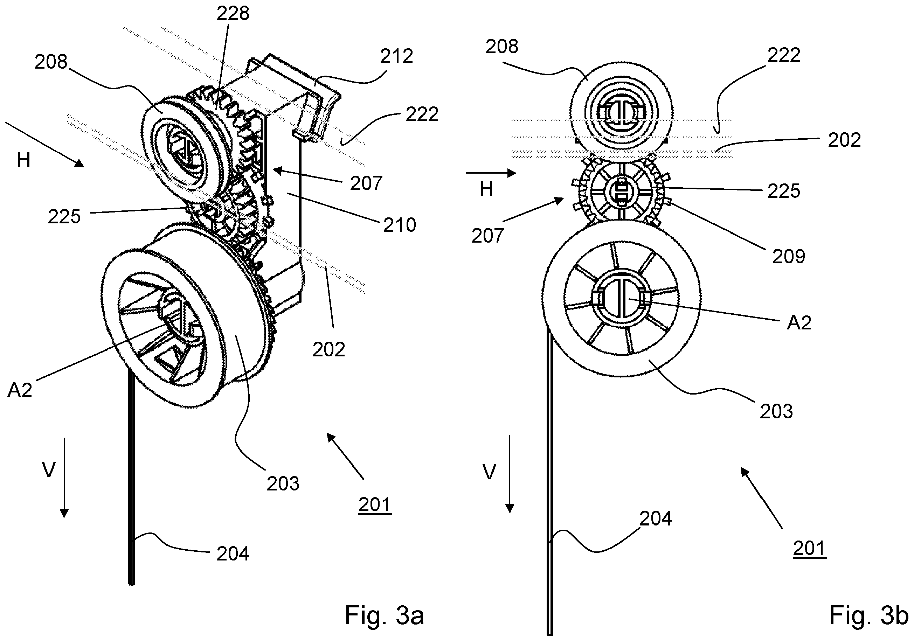

Figures 3a - 3d show another embodiment of the device 201. In these figures, parts comparable to the parts shown in figures 1a - 1d and figures 2a - 2d are indicated by the same reference numerals incremented by 200 and 100, respectively.

The operation of the device 201 shown in figures 3a -3d is substantially the same as the operation of the device described with reference to figures 2a - 2d, but the arrangement and placement of the various parts, in particular the placement of the pressure line, are slightly different. The embodiment is more compact than the one shown in figures 2a - 2d, which is advantageous because there will be less light loss in that case and plant growth will be impeded less.

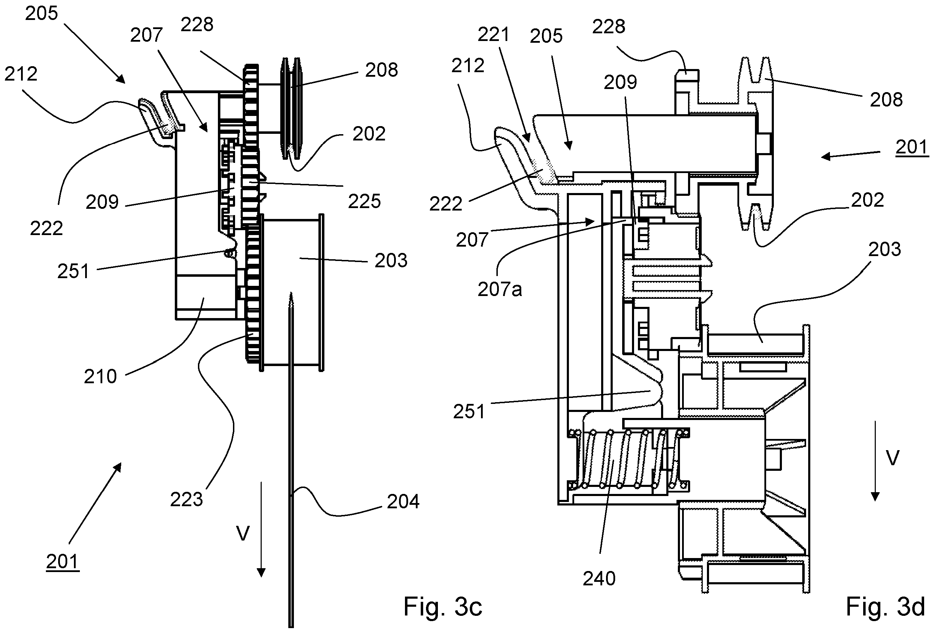

The device shown in figures 3a - 3d is in particular provided with a spring 240 that acts between the actuator element 212 and the base element 210. Since the pressure line 222 and the spring 240 engage the actuator element 212 on opposite sides of the pivot pin 251, the actuator: 12 will move to a position in which the brake assembly 205 is actuated in the situation in which the pressure line 222 has been pressurised and the diameter has increased and in the situation in which the pressure in the pressure line 222 has been reduced and the diameter of the pressure line has decreased. The actuated position in which the pressure in the pressure line 222 is reduced is shown in figures 3c and 3d.

In use of the device 201, the device is moved from the actuated position shown in figures 3a - 3d to the non-actuated position by rotation of the actuator element 212 about the pivot pin 251. Rotation of the actuator element 212 takes place by alternately pressurising the pressure line 221 and reducing the pressure in the pressure line 222. Pressurisation of the pressure line 222 will cause the pressure line to expand, as a result of which the diameter of the pressure line 222 will increase. As a result, the actuator element 212 is rotated about the pivot pin 251 relative to the base element 210. Reduction of the pressure in the pressure line 222 will cause the diameter of the pressure line 222 to decrease, as a result of which the actuator element 212 will rotate in the opposite direction about the pivot pin 251 relative to the base element 210. This rotation in opposite direction is effected by the spring action of the spring 240.

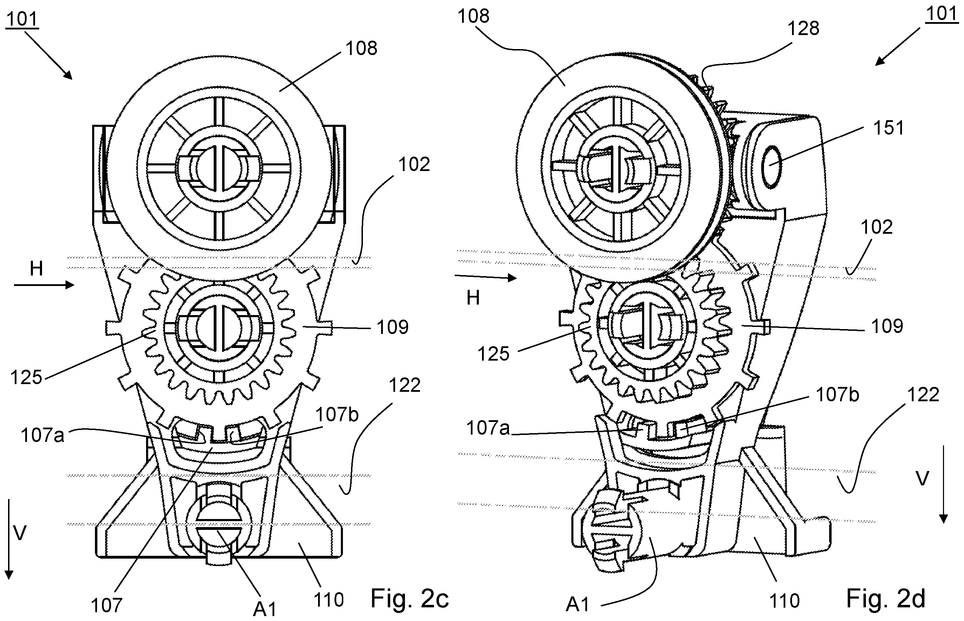

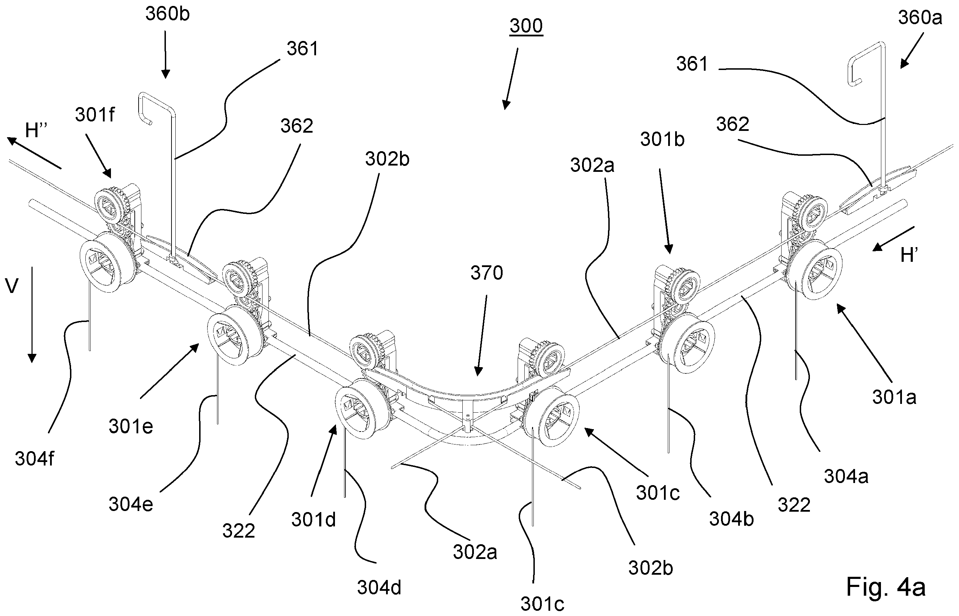

Figure 4a schematically shows in isometric view a cultivation system 300 according to an embodiment of the invention. The cultivation system comprises a wire assembly 302a, 302b tensioned substantially in horizontal direction H', H", to which a number of devices 301a - 301f according to the present invention are connected, which devices are movable over the wire assembly. The devices 301a - 301f used in the illustrated embodiment are substantially identical to the devices described with reference to figure 2. It will be understood, however, that other embodiments of the devices 301a - 301f are also conceivable. The devices 301a - 301f comprise climbing medium 304a - 304f extending in a vertical direction V, along which climbing plants (not shown) can be trained.

In the illustrated embodiment, the wire assembly consists of a wire element 302a extending in a first horizontal direction H' and a further wire element 302b extending in a second horizontal direction H". The wire elements 302a, 302b are suspended by means of suspension elements 360a, 360b. The wires converge at the location of a corner connecting element 370. The corner connecting element 370 enables the devices 301a - 301f to move from the first wire element 302a to the second wire element 302b. By using one or more corner connecting elements 370, an entire cultivation area, for example of a greenhouse, can thus be suitably provided with devices 301a - 302f for making climbing parts grow in vertical direction.

In the illustrated embodiment, the cultivation system further comprises an actuator line 322, which is located essentially lower than the wire assembly 302a, 302b and which extends substantially parallel thereto. Placement above the wire assembly 302a, 302b is also conceivable, however. The actuator line is connected to one or more of the devices 301a - 301f, in particular to each one of the devices, in that it is accommodated in a receiving space 121, which is not shown in this figure but which has already been discussed with reference to figures 2a and 2b. The actuator line 322 is used for placing the brake assembly of the devices 301a - 302f in a non-actuated position, so that said one or more devices 301a-301f can undergo a small horizontal movement with every movement of the escapement mechanism, whilst at the same time climbing medium 304a - 304f will be paid out from the device 301a - 301f for lowering the climbing plants attached to the climbing medium in small, controlled steps.

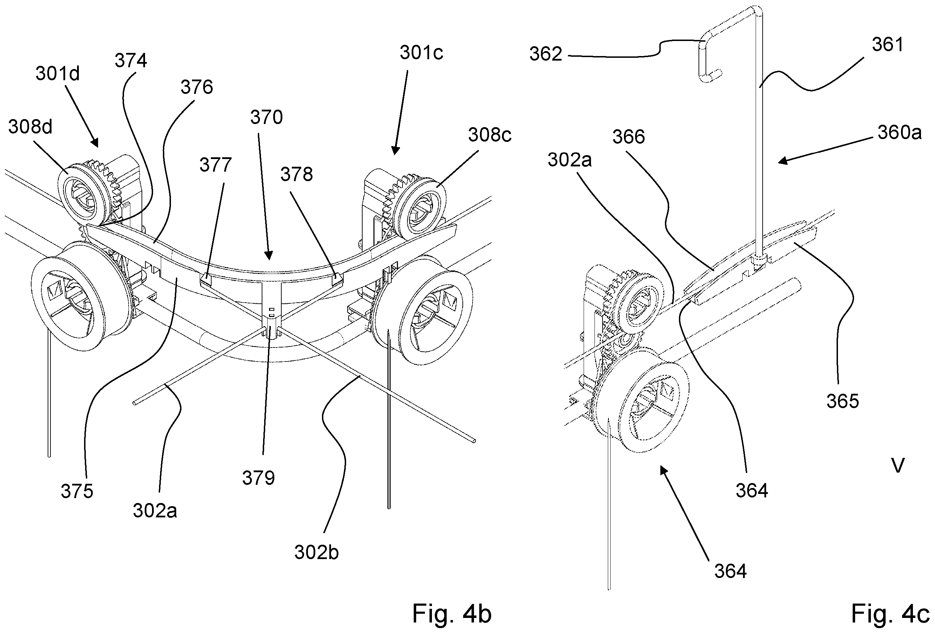

Figure 4b shows a detail of a bend in the cultivation system 300. The bend is made up of a corner connecting element 370. The corner connecting element comprises a running surface 374 (only shown in part), over which the moving elements 308c, 308d of the devices 301c, 301d are movable. The running surface 374 forms a bend, such that the devices can move from a first horizontal direction H' to a second horizontal direction H". The running surface 374 is surrounded by two flange walls 375, 376, which extend in upward direction from the running surface 374 and which guide the devices upon passing through the bend. In the U-shaped channel formed by the running surface 374 and the flange walls 375, 376, the two converging wire elements 302a, 302b are provided. The wire elements 302a, 302b extend in straight lines and cross the outer flange wall 375 at the location of openings 377, 378 formed in the flange wall. Via these openings, the wire elements 302a, 302b extend to a wire holder 379 of the coupling element 370. This construction enables the devices to move from one wire element 302a to the other wire element 302b in a simple and smooth manner.

Figure 4c shows a detail of a suspension element 360a for use in a system according to the present invention. Like the connecting element, the suspension element comprises a running surface 364, which is surrounded by flange walls 365, 366 for forming a U-shaped channel. The wire element 302a extends in this U-shaped channel. The suspension element 360a supports the wire element 302a. The running surface 364, and thus the wire element 302a, can be suspended at a desired height by means of a hook-shaped element 361, 362.

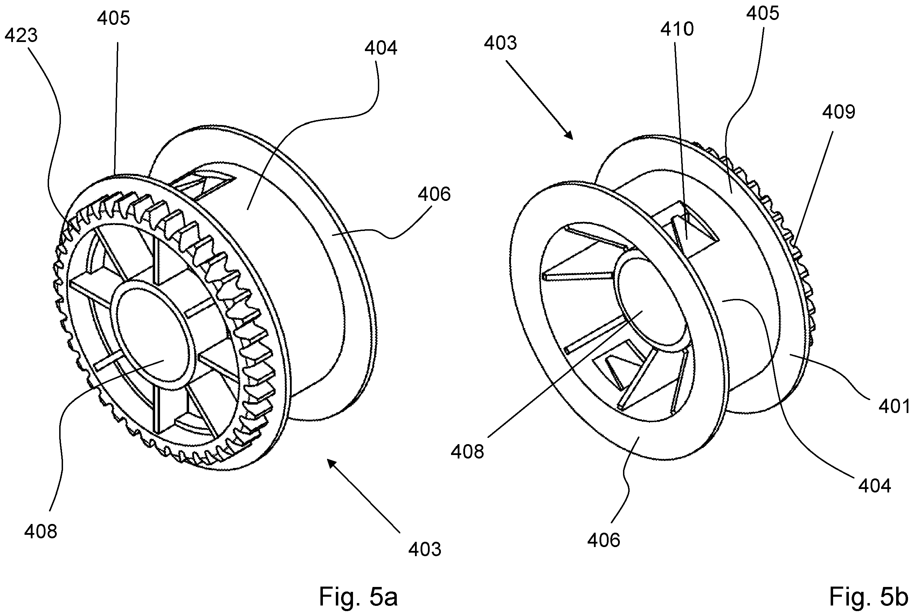

Figures 5a and 5b, to conclude, shows a front view and a rear view, respectively, of a holder element 403 according to an embodiment of the present invention. The illustrated holder element 403 is configured to be detachably connectable to a base element for forming a device for making climbing plants such as tomato plants or cucumber plants grow substantially in vertical direction. The holder element comprises a cylindrical body 404, which is provided with a hollow mounting shaft 408, by means of which the holder element 403 can be placed on the base element of the device. The cylindrical body 404 is on both sides surrounded by flanges 405, 406 for forming a receiving space for climbing medium, in particular wire or string, which is known per se to the skilled person. The holder element 403 further comprises a hook element 410, to which one end of the climbing medium can be attached, for example upon manufacture of such a holder element 403, so that the climbing medium is firmly connected to the holder element 403 and cannot undesirably come loose in use. According to the invention, the holder element 403 is provided with a gear element 409, which is configured to cooperate with the escapement mechanism of the device, such that the unwinding of the climbing medium can only take place small step by small step.

The gear element 409 that is shown here is configured to mesh with a further gear element of the device, for example with the gear of the transmission described with reference to figures 2 and 3. In this way the escapement mechanism acts on the holder element via the further gear element. The illustrated gear element 409 may alternatively also be configured as a cogwheel which mates directly with the escapement mechanism.

The device according to the present invention may be substantially made of plastic material. An embodiment made of plastic material is relatively inexpensive, durable and wear resistant. Possibly, one or more parts may be made of a metal, in particular a light metal, such as aluminium.

The skilled person will appreciate that in the foregoing the invention has been described with reference to a few possible embodiments that are preferred. The invention is not limited to these embodiments, however. Many modifications are conceivable within the scope of the invention. The protection sought is defined in the appended claims.

## Claims

1. A device (1) for making climbing plants such as tomato plants or cucumber plants grow substantially in vertical direction, comprising:
- a rotatable holder element (3) provided with climbing medium (4), such as wire or string, which extends vertically downward from the holder element, at least in use, wherein a length of the climbing medium extending from the holder element can be adjusted by rotation of the holder element;
- a brake assembly (5) which is configured to prevent rotation of the holder element (3) in an actuated position and to allow rotation of the holder element (3) in a non-actuated position, wherein the brake assembly (5) comprises an escapement mechanism (7), wherein the device comprises a cogwheel (9) that is operatively connected to the holder element, wherein the escapement mechanism (7) is configured to engage the cogwheel (9), **characterised in that** the escapement mechanism (7) is configured to act on the holder element (3) in such a manner that in the non-actuated position of the brake assembly (5) the holder element (3) can only rotate through a limited angle.

2. A device according to claim 1, wherein the escapement mechanism (7) comprises one or more stop elements (7a, 7b) configured to engage teeth of the cogwheel (9).

3. A device according to any one of the preceding claims, wherein the device comprises a moving element (8) for moving the device substantially in horizontal direction (H), in particular wherein the brake assembly (5) is configured to prevent movement of the device (1) in horizontal direction (H) in the actuated position and to allow movement of the device (1) in horizontal direction (H) in the non-actuated position, wherein the escapement mechanism (7) is configured to act on the moving element (8) in such a manner that in the non-actuated position of the brake assembly the device (1) can only be moved by a limited horizontal distance (H).

4. A device according to claim 3, wherein the moving element (8) is operatively connected to the rotatable holder element (3) for rotating the holder element (3) during a horizontal movement.

5. A device according to claim 3, wherein the moving element (8) comprises a guide wheel (8) that is configured to be movable over a substantially horizontally (H) extending cable (2), in particular wherein the guide wheel (8) comprises one or more flanged edges (18).

6. A device according to claim 4 or 5, wherein the moving element (118) comprises a gear element (118).

7. A device according to claim 6, wherein the holder element (103) comprises a further gear element (123), in particular wherein the device comprises a transmission (125), in particular in the form of a gear (125), disposed between the gear element (118) and the further gear element (123).

8. A device according to claim 2 and one or more of claims 6 and 7, wherein one or more of the gear element, (118) the further gear element (123) and the transmission (125) is/are provided with the cogwheel (109).

9. A device according to one or more of the preceding claims, wherein the brake mechanism (5) comprises an actuator element (12) for alternately placing the brake assembly (5) in the actuated and the non-actuated position, in particular wherein the device comprises a receiving space (121) for a pressure line (122), which receiving space is provided in such a manner that, in use, the actuator element is moved to the actuated position upon pressurisation of the pressure line.

10. A device according to one or more of the preceding claims, wherein the device comprises urging means (240) for placing the brake assembly (205) in the actuated position.

11. A device according to one or more of the preceding claims, wherein the holder element (103) is detachably connected to the device (101).

12. A cultivation system for cultivating climbing plants such as tomato plants or cucumber plants, comprising a substantially horizontally extending wire element as well as one or more devices according to one or more of the preceding claims 1 - 11.

13. A cultivation system according to claim 12, further comprising an actuator line which is connected to at least one device and which is configured to place the brake assembly associated with the device in a non-actuated position upon actuation of the actuator line.

14. A cultivation system according to claim 13, wherein the actuator line is a pressure line, in particular a pneumatic pressure line.

## Patentansprüche

1. Vorrichtung (1), um Kletterpflanzen, zum Beispiel Tomatenpflanzen oder Gurkenpflanzen, im Wesentlichen in vertikale Richtung wachsen zu lassen, Folgendes umfassend:
- ein drehbares Halterungselement (3), das mit einem Klettermedium (4), zum Beispiel Draht oder Faden, versehen ist, das sich zumindest bei der Verwendung vom Halterungselement vertikal nach unten erstreckt, wobei eine Länge des Klettermediums, die sich vom Halterungselement erstreckt, durch Drehen des Halterungselements angepasst werden kann;
- eine Bremsanordnung (5), die dazu ausgelegt ist, die Drehung des Halterungselements (3) in einer betätigten Stellung zu verhindern und die Drehung des Halterungselements (3) in einer nicht betätigten Stellung zuzulassen, wobei die Bremsanordnung (5) einen Verankerungsmechanismus (7) umfasst, wobei die Vorrichtung ein Zahnrad (9) umfasst, das mit dem Halterungselement wirkverbunden ist, wobei der Verankerungsmechanismus (7) dazu ausgelegt ist, in das Zahnrad (9) einzugreifen, **dadurch gekennzeichnet, dass** der Verankerungsmechanismus (7) dazu ausgelegt ist, derart auf das Halterungselement (3) zu wirken, dass sich das Halterungselement (3) in der nicht betätigten Stellung der Bremsanordnung (5) nur in einem eingeschränkten Winkelbereich drehen kann.

2. Vorrichtung nach Anspruch 1, wobei der Verankerungsmechanismus (7) ein oder mehrere Anschlagelemente (7a, 7b) umfasst, das/die dazu ausgelegt ist/sind, in die Zähne des Zahnrads (9) einzugreifen.

3. Vorrichtung nach einem der vorstehenden Ansprüche, wobei die Vorrichtung ein Bewegungselement (8) zum Bewegen der Vorrichtung im Wesentlichen in die horizontale Richtung (H) umfasst, insbesondere wobei die Bremsanordnung (5) dazu ausgelegt ist, in der betätigten Stellung die Bewegung der Vorrichtung (1) in die horizontale Richtung (H) zu verhindern und in der nicht betätigten Stellung die Bewegung der Vorrichtung (1) in die horizontale Richtung (H) zuzulassen, wobei der Verankerungsmechanismus (7) dazu ausgelegt ist, derart auf das Bewegungselement (8) zu wirken, dass die Vorrichtung (1) in der nicht betätigten Stellung der Bremsanordnung nur eine begrenzte horizontale Entfernung (H) bewegt werden kann.

4. Vorrichtung nach Anspruch 3, wobei das Bewegungselement (8) mit dem drehbaren Halterungselement (3) wirkverbunden ist, um das Halterungselement (3) während einer horizontalen Bewegung zu drehen.

5. Vorrichtung nach Anspruch 3, wobei das Bewegungselement (8) ein Führungsrad (8) umfasst, das dazu ausgelegt ist, über ein sich im Wesentlichen horizontal (H) erstreckendes Seil (2) beweglich zu sein, insbesondere wobei das Führungsrad (8) eine oder mehrere Flanschkanten (18) umfasst.

6. Vorrichtung nach Anspruch 4 oder 5, wobei das Bewegungselement ein Zahnradelement (118) umfasst.

7. Vorrichtung nach Anspruch 6, wobei das Halterungselement (103) ein weiteres Zahnradelement (123) umfasst, insbesondere wobei die Vorrichtung ein Getriebe (125) umfasst, insbesondere in Form eines Zahnrads (125), das zwischen dem Zahnradelement (118) und dem weiteren Zahnradelement (123) angeordnet ist.

8. Vorrichtung nach Anspruch 2 und Anspruch 6 und/oder 7, wobei das Zahnradelement (118), das weitere Zahnradelement (123) und/oder das Getriebe (125) mit dem Zahnrad (109) versehen ist/sind.

9. Vorrichtung nach einem oder mehreren der vorstehenden Ansprüche, wobei der Bremsmechanismus (5) ein Stellgliedelement (12) umfasst, um die Bremsanordnung (5) abwechselnd in die betätigte und nicht betätigte Stellung zu bringen, insbesondere wobei die Vorrichtung einen Aufnahmeraum (121) für eine Druckleitung (122) umfasst, wobei der Aufnahmeraum derart vorgesehen ist, dass bei der Verwendung das Stellgliedelement bei der Druckbeaufschlagung der Druckleitung in die betätigte Stellung bewegt wird.

10. Vorrichtung nach einem oder mehreren der vorstehenden Ansprüche, wobei die Vorrichtung eine Drückeinrichtung (240) umfasst, um die Bremsanordnung (205) in die betätigte Stellung zu bringen.

11. Vorrichtung nach einem oder mehreren der vorstehenden Ansprüche, wobei das Halterungselement (103) mit der Vorrichtung (101) lösbar verbunden ist.

12. Anbausystem zum Anbauen von Kletterpflanzen, zum Beispiel Tomatenpflanzen oder Gurkenpflanzen, ein sich im Wesentlichen horizontal erstreckendes Drahtelement sowie eine oder mehrere Vorrichtungen nach einem oder mehreren der vorstehenden Ansprüche 1-11 umfassend.

13. Anbausystem nach Anspruch 12, ferner eine Stellgliedleitung umfassend, die mit mindestens einer Vorrichtung verbunden und dazu ausgelegt ist, die der Vorrichtung zugehörige Bremsanordnung bei Betätigung der Stellgliedleitung in eine nicht betätigte Stellung zu bringen.

14. Anbausystem nach Anspruch 13, wobei die Stellgliedleitung eine Druckleitung ist, insbesondere eine Druckluftleitung.

## Revendications

1. Dispositif (1) pour faire pousser des plantes grimpantes telles que des plants de tomate ou des plants de concombre sensiblement dans une direction verticale, comprenant :
- un élément de retenue rotatif (3) muni d'un support pour plantes grimpantes (4), tel qu'un fil ou une corde, qui s'étend verticalement vers le bas à partir de l'élément de retenue, au moins en cours d'utilisation, dans lequel une longueur du support pour plantes grimpantes s'étendant à partir de l'élément de retenue peut être réglée par rotation de l'élément de retenue ;
- un ensemble frein (5) qui est configuré pour empêcher la rotation de l'élément de retenue (3) dans une position actionnée et pour permettre la rotation de l'élément de retenue (3) dans une position non actionnée, dans lequel l'ensemble frein (5) comprend un mécanisme d'échappement (7), dans lequel le dispositif comprend une roue dentée (9) qui est reliée de manière fonctionnelle à l'élément de retenue, dans lequel le mécanisme d'échappement (7) est configuré pour s'engager avec la roue dentée (9), **caractérisé en ce que** le mécanisme d'échappement (7) est configuré pour agir sur l'élément de retenue (3) de manière à ce que, dans la position non actionnée de l'ensemble frein (5), l'élément de retenue (3) puisse uniquement tourner sur un angle limité.

2. Dispositif selon la revendication 1, dans lequel le mécanisme d'échappement (7) comprend un ou plusieurs élément(s) de butée (7a, 7b) configuré(s) pour s'engager avec les dents de la roue dentée (9).

3. Dispositif selon l'une quelconque des revendications précédentes, dans lequel le dispositif comprend un élément de déplacement (8) pour déplacer le dispositif sensiblement dans une direction horizontale (H), en particulier dans lequel l'ensemble frein (5) est configuré pour empêcher le mouvement du dispositif (1) dans la direction horizontale (H) dans la position actionnée et pour permettre le mouvement du dispositif (1) dans la direction horizontale (H) dans la position non actionnée, dans lequel le mécanisme d'échappement (7) est configuré pour agir sur l'élément de déplacement (8) de manière à ce que, dans la position non actionnée de l'ensemble frein, le dispositif (1) ne puisse être déplacé que sur une distance horizontale limitée (H).

4. Dispositif selon la revendication 3, dans lequel l'élément de déplacement (8) est relié de manière fonctionnelle à l'élément de retenue rotatif (3) pour faire tourner l'élément de retenue (3) pendant un mouvement horizontal.

5. Dispositif selon la revendication 3, dans lequel l'élément de déplacement (8) comprend une roue de guidage (8) qui est configurée pour être mobile sur un câble (2) s'étendant sensiblement horizontalement (H), en particulier dans lequel la roue de guidage (8) comprend un ou plusieurs bord(s) rabattu(s) (18).

6. Dispositif selon la revendication 4 ou 5, dans lequel l'élément de déplacement comprend un élément d'engrenage (118).

7. Dispositif selon la revendication 6, dans lequel l'élément de retenue (103) comprend un élément d'engrenage supplémentaire (123), en particulier dans lequel le dispositif comprend une transmission (125), en particulier sous la forme d'un engrenage (125), disposée entre l'élément d'engrenage (118) et l'élément d'engrenage supplémentaire (123).

8. Dispositif selon la revendication 2 et une ou plusieurs des revendications 6 et 7, dans lequel un ou plusieurs de l'élément d'engrenage (118), de l'élément d'engrenage supplémentaire (123) et de la transmission (125) est/sont muni(s) de la roue dentée (109).

9. Dispositif selon une ou plusieurs des revendications précédentes, dans lequel le mécanisme de freinage (5) comprend un élément d'actionnement (12) pour placer de manière alternée l'ensemble frein (5) dans la position actionnée et la position non actionnée, en particulier dans lequel le dispositif comprend un espace de réception (121) pour une ligne de pression (122), lequel espace de réception est prévu de manière à ce qu'en cours d'utilisation, l'élément d'actionnement soit déplacé vers la position actionnée lors de la mise sous pression de la ligne de pression.

10. Dispositif selon une ou plusieurs des revendications précédentes, dans lequel le dispositif comprend des moyens de sollicitation (240) pour placer l'ensemble frein (205) dans la position actionnée.

11. Dispositif selon une ou plusieurs des revendications précédentes, dans lequel l'élément de retenue (103) est relié de manière amovible au dispositif (101).

12. Système de culture pour cultiver des plantes grimpantes telles que des plants de tomate ou des plants de concombre, comprenant un élément de fil s'étendant sensiblement horizontalement ainsi qu'un ou plusieurs dispositif(s) selon une ou plusieurs des revendications précédentes 1 à 11.

13. Système de culture selon la revendication 12, comprenant en outre une ligne d'actionnement qui est reliée à au moins un dispositif et qui est configurée pour placer l'ensemble frein associé au dispositif dans une position non actionnée lors de l'actionnement de la ligne d'actionnement.

14. Système de culture selon la revendication 13, dans lequel la ligne d'actionnement est une ligne de pression, en particulier une ligne de pression pneumatique.
